# EUROPEAN PATENT SPECIFICATION

(11) **EP 2 608 585 B1**
(45) Date of publication and mention of the grant of the patent: **14.01.2015**
(21) Application number: 10856070.7
(22) Date of filing: 21.10.2010
(51) Int. Cl.: H04W 8/24, G06F 9/445

(54) **METHOD, DEVICE AND SYSTEM FOR TRIGGERING TERMINAL OPERATION**
VERFAHREN, VORRICHTUNG UND SYSTEM ZUR AUSLÖSUNG EINES ENDGERÄTEBETRIEBS
PROCÉDÉ, DISPOSITIF ET SYSTÈME DE DÉCLENCHEMENT D'OPÉRATION DE TERMINAL

(30) Priority: 20.08.2010 CN 201010260471
(43) Date of publication of application: 26.06.2013
(73) Proprietor: ZTE Corporation, Shenzhen, Guangdong 518057 (CN)
(72) Inventor: LI, Tao, Guangdong 518057 (CN)
(74) Representative: D'Halleweyn, Nele Veerle Trees Gertrudis
(86) International application number: PCT/CN2010/077956
(87) International publication number: WO 2012/022072

(56) References cited:
- WO-A2-2008/067446
- CN-A- 101 005 417
- CN-A- 101 184 301
- CN-A- 101 420 431
- US-A1- 2009 075 641
- US-A1- 2009 265 471
- "Firmware Update Management Object Architecture ; OMA-AD-FUMO-V1_0-20070209-A", OMA-AD-FUMO-V1_0-20070209-A, OPEN MOBILE ALLIANCE (OMA), 4330 LA JOLLA VILLAGE DR., SUITE 110 SAN DIEGO, CA 92122 ; USA, no. 1.0, 9 February 2007 (2007-02-09), pages 1-15, XP064119311, [retrieved on 2007-02-23]

## Description

### Field of the Invention

The present invention relates to communication field, and in particular to a method, an apparatus and a system for initiating a terminal operation.

### Background of the Invention

With the increasing enrichment and complexity of the mobile data service, the dependence of the service on the terminal is higher and higher. The mobile terminal, as a carrier for a user to use the mobile service, has become a necessary and important constitute part in the mobile operation service system. In order to better enable the terminal to possess rapid improvement ability so as to face the increasingly fierce market competition, the period for pushing new terminal product functions of future terminal manufacturers will be shorter and shorter, and the period for pushing new services of operators will also become shorter and shorter. Therefore, to provide effective and convenient upgrade service and firmware over the air (abbreviated as FOTA operation) becomes a critical technology in the Device Management (abbreviated as DM) and is highly focused by the communication industries.

The FOTA operation mainly refers to a method for updating the firmware in a terminal device by means of air interface remote management. By means of the FOTA operation, not only the upgrade application software can be downloaded, and also the operating system of the device can be updated. In this way, device manufacturers can send upgrade packages to a terminal device of a user via the network by the FOTA operation so as to upgrade the firmware and software, which not only brings convenience to the user but also reduces the cost for the manufacturers.

The FOTA operation can be divided into Network-Initiated, Client-Initiated, and User-Initiated according to initiation types. In the above, Network-Initiated, i.e. server-initiated, is a commonly used manner for the operators to initiate the FOTA operation.

The FOTA operations initiated by the above three types are initiated by a DM session. A server gets (Get) the current firmware version of the terminal device from the DM session so as to judge and decide whether this terminal device needs to carry out the FOTA operation. If yes, then the server replaces (Replace) the node value /DownloadAndUpdate/PkgURL of the terminal device in the DM session, and then sends an execution (Exec) command on the node /DownloadAndUpdate, wherein Exec command initiates the FOTA operation flow.

However, the initiation of the above FOTA operation depends upon the DM session, and the DM session brings redundant data amount.

US 2009/0075641 provides a method for providing over-the-air updates of firmware of a mobile telephone handset.

### Summary of the Invention

According to the present invention, a method for initiating a terminal operation as set forth in claim 1, a server as set forth in claim 6 and a terminal as set forth in claim 7 are provided. Embodiments of the invention are claimed in the dependent claims.

The present disclosure is proposed with respect to the problem that the initiation of the above FOTA operation depends upon the DM session and the DM session brings redundant data amount.

According to one aspect of the present disclosure a method for initiating a terminal operation is provided.

The method for initiating a terminal operation according to the present disclosure comprises: a server encapsulating firmware update information for initiating a terminal to carry out a Firmware over the Air (FOTA) operation; the server sending a Push message to the terminal and carrying the firmware update information in the Push message; and the terminal carrying out the FOTA operation by using the firmware update information carried in the Push message.

Furthermore, the step of the server encapsulating the firmware update information for initiating the terminal to carry out the FOTA operation comprises: the server encapsulating the firmware update information comprising a Firmware Update Management Object (FUMO) standard node and an FUMO extension node, wherein the FUMO standard node and the FUMO extension node are used for initiating the terminal to carry out the FOTA operation.

Furthermore, the FUMO extension node comprises: a node value for indicating an original version of firmware update; and a node value for indicating an upgrade version of firmware update.

Furthermore, the FUMO standard node comprises: a node value for indicating a download address of the FOTA operation; and a running command on a node value for initiating the terminal to carry out the FOTA operation.

Furthermore, the FUMO extension node value comprises: a node value for indicating a priority of the FOTA operation.

Furthermore, the step of the terminal carrying out the FOTA operation by using the firmware update information carried in the Push message comprises: the terminal receiving the Push message from the server; the terminal sending the Push message to a Device Management (DM) client; and the DM client carrying out the FOTA operation on the terminal by using the firmware update information carried in the Push message.

Furthermore, the step of the DM client carrying out the FOTA operation on the terminal by using the firmware update information carried in the Push message comprises: the DM client judging whether an original version value of the firmware update information is the same as a firmware version value of the terminal; if the judgment result is yes, then the DM client judging whether an upgrade version value in the firmware update information is a version value accepted by the terminal; and if the judgment result is yes, then the DM client carrying out the FOTA operation on the terminal.

In order to achieve the above object, a server is provided according to another aspect of the present disclosure.

The server according to the present disclosure comprises: a Device Management (DM) server module, configured to encapsulate firmware update information for initiating a terminal to carry out a Firmware over the Air (FOTA) operation; a carrying module, configured to carry the firmware update information in a Push message; and a first sending module, configured to send the Push message to the terminal so as to initiate the terminal to carry out the FOTA operation by using the firmware update information carried in the Push message.

In order to achieve the above object, a terminal is provided according to yet another aspect of the present disclosure.

The terminal according to the present disclosure comprises: a receiving module, configured to receive a Push message from a server, wherein the Push message carries firmware update information, and the firmware update information is used for initiating a terminal to carry out a Firmware over the Air (FOTA) operation; and a second sending module, configured to send the Push message to a Device Management (DM) client so that the DM client carries out the FOTA operation on the terminal by using the firmware update information carried in the Push message.

In order to achieve the above object, a system for initiating a terminal operation is provided according to yet another aspect of the present disclosure.

The system for initiating a terminal operation according to the present disclosure comprises the above server comprising a DM server module, a carrying module and a first sending module and the above terminal comprising a receiving module and a second sending module.

In the present disclosure the server is used for sending firmware update information to the terminal for initiating the terminal to carry out the FOTA operation, which solves the problem that the initiation of the FOTA operation depends upon the DM session and the DM session brings redundant data amount, and thereby the dependence of the FOTA operation on the DM session is avoided and the redundant data amount caused by the DM session is reduced.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
FIG. 1 is a schematic structural diagram of a tree defined by firmware update management object (FUMO) standard in the related art;
FIG. 2 is a flowchart of a method for initiating a terminal operation according to one embodiment of the present invention;
FIG. 3 is a schematic structural diagram of a tree defined by the FUMO standard according to one embodiment of the present invention;
FIG. 4 is a schematic flowchart of device management of rapidly initiating a Network-Initiated FOTA operation by using a Push message according to one embodiment of the present invention;
FIG. 5 is a structural block diagram of a server according to one embodiment of the present invention;
FIG. 6 is a structural block diagram of a terminal according to one embodiment of the present invention; and
FIG. 7 is a structural block diagram of a system for initiating a terminal operation according to one embodiment of the present invention.

### Detailed Description of Embodiments

It needs to note that the embodiments of the present application and the features in the embodiments can be combined with each other if there is no conflict. The present invention will be described hereinafter in detail with reference to the drawings and in conjunction with embodiments.

The object of the present invention is to propose a terminal management method for rapidly initiating a Network-Initiated FOTA operation by using a Push message. A server carries the necessary information required by the FOTA operation into the Push message. After a terminal has received the Push message, a DM client judges whether the FOTA operation is required according to the current version and the updated version. If yes, then the FOTA operation is directly initiated.

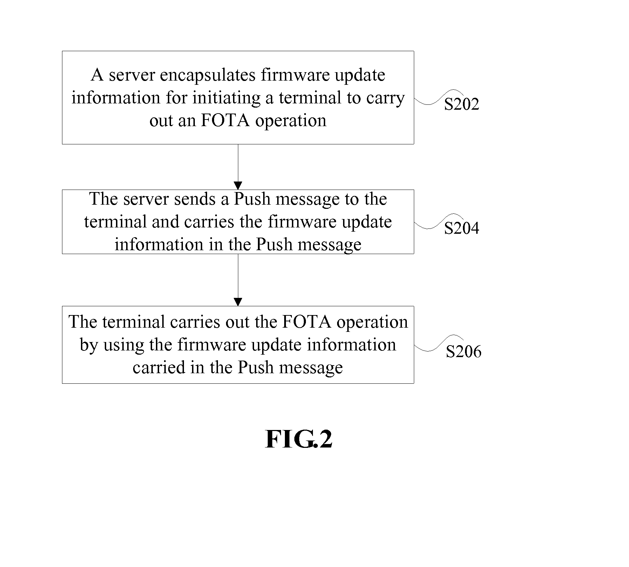

FIG. 2 is a flowchart of a method for initiating a terminal operation according to one embodiment of the present invention. As shown in FIG. 2, the method comprises the steps S202 to S206 as follows.

Step S202, a server encapsulates firmware update information for initiating a terminal to carry out a FOTA operation.

Step S204, the server sends a Push message to the terminal and carries the firmware update information in the Push message.

Step S206, the terminal carries out the FOTA operation by using the firmware update information carried in the Push message.

In the related art, the FOTA operation of the terminal is initiated by a DM session. However, the DM session will cause redundant data amount. In the embodiment of the present invention, the server carries the necessary information required by the FOTA operation in the Push message. After the terminal has received the Push message, the DM client judges whether the FOTA operation is required according to the current version and the updated version, and thereby the dependence of the FOTA operation on the DM session is avoided and the redundant data amount caused by the DM session is reduced.

Preferably, the step of the server encapsulating the firmware update information for initiating the terminal to carry out the FOTA operation comprises the step of: the server encapsulating the firmware update information comprising a FUMO standard node and an FUMO extension node, wherein the FUMO standard node and the FUMO extension node are used for initiating the terminal to carry out the FOTA operation.

In this preferable embodiment, the terminal is initiated to carry out the FOTA operation by adding the node value, the implementation of which is simple and convenient.

Preferably, the FUMO extension node comprises: a node value of the firmware update information added by the server; a node value for indicating the original version of firmware update; and a node value for indicating the upgrade version of firmware update.

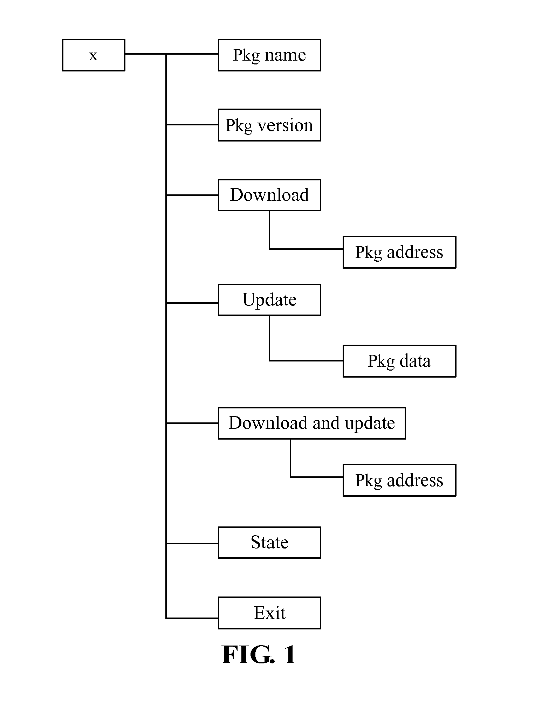

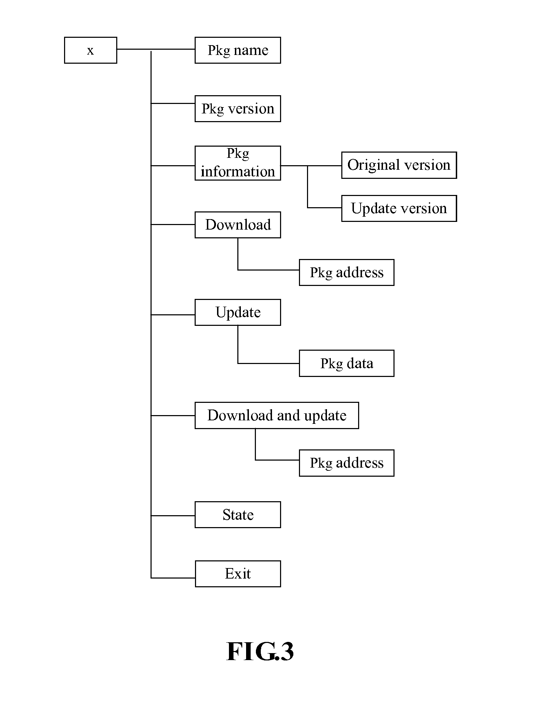

FIG. 1 is a schematic structural diagram of a tree defined by FUMO standard in the related art, and FIG. 3 is a schematic structural diagram of a tree defined by the FUMO standard according to one embodiment of the present invention. In this preferable embodiment, since the judgment of whether to carry out the FOTA operation is transited from the server to the terminal device, it is required to add a node related to the information about the FOTA operation for being used by the DM client when judging whether to carry out the FOTA operation. The extended FUMO tree structure is as shown in FIG. 3. The attribute definition of the newly added node is as follows:
the server increases the node value /Pkglnfo of the firmware update information,
Occurrence: ZeroOrOne,
Format: Node,
Access Types: Get;
the server increases the node value /Pkglnfo/OriginalVersion of the original version in the firmware update information,
Occurrence: ZeroOrOne,
Format: chr,
Access Types: Get, Replace;
the server increases the node value /Pkglnfo/UpdatedVersion of the updated version in the firmware update information,
Occurrence: ZeroOrOne,
Format: chr,
Access Types: Get, Replace.

Preferably, the FUMO standard node comprises: a node value for indicating the download address of the FOTA operation; and a running command on the node value for initiating the terminal to carry out the FOTA operation.

Preferably, the FUMO extension node value comprises: a node value for indicating the priority of the FOTA operation.

In this preferable embodiment, whether the operator has allocated a priority to the FOTA operation can be first judged, and if the judgment result is yes, then the node value for indicating the priority of the FOTA operation is added, wherein the node value can be Severity.

Preferably, the step of the terminal carrying out the FOTA operation by using the firmware update information carried in the Push message comprises the steps of: the terminal receiving the Push message from the server; the terminal sending the Push message to the DM client; and the DM client carrying out the FOTA operation on the terminal by using the firmware update information carried in the Push message.

Preferably, the step of the DM client carrying out the FOTA operation on the terminal by using the firmware update information carried in the Push message comprises the steps of: the DM client judging whether the original version value of the firmware update information is the same as the firmware version value of the terminal; if the firmware update information is the same as the firmware version value of the terminal, then the DM client judging whether the upgrade version value in the firmware update information is the version value accepted by the terminal; and if the upgrade version value in the firmware update information is the version value accepted by the terminal, then the DM client carries out the FOTA operation on the terminal.

It needs to be noted that if one of above judgment results is no, i.e. the DM client judges that the original version value of the firmware update information and the firmware version value of the terminal are different or the DM client judges that the upgrade version value of the firmware update information is a version value not accepted by the terminal, then the FOTA operation will not be carried out.

This preferable embodiment can ensure the accuracy and reliability of the firmware update of the terminal.

The present invention rapidly initiates the Network-Initiated FOTA operation by using the Push message. The Push message sent by the server directly comprises necessary information required by the FOTA operation. After having received the Push message, the terminal device first judges whether or not to carry out the FOTA operation, and if yes, then the terminal device directly initiates a DL session but not initiates the DM session. The dependence of the FOTA operation on the DM session is avoided and the redundant data amount caused by the DM session is reduced.

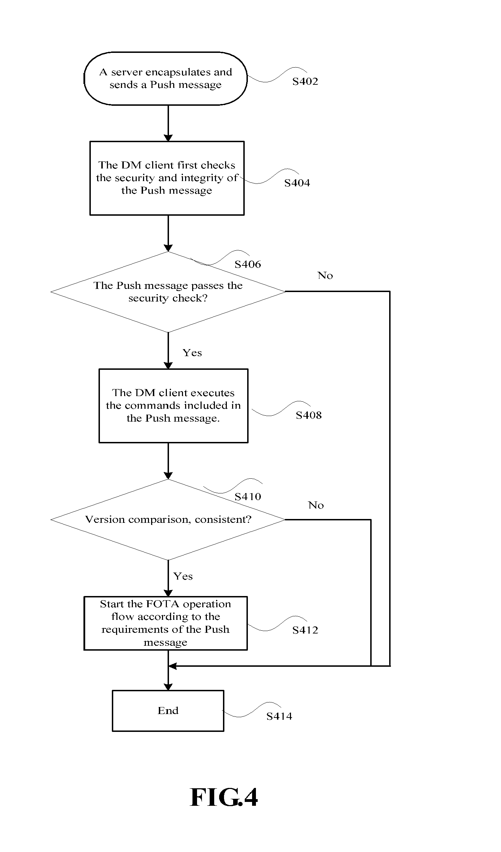

The present invention further provides a preferable embodiment, and the preferable embodiment will be described in detail in conjunction with the technical solutions of the above multiple preferable embodiments and FIG. 4.

FIG. 4 is a schematic flowchart of device management of rapidly initiating a Network-Initiated FOTA operation by using a Push message according to one embodiment of the present invention, and as shown in FIG. 4, the flow comprises the steps S402 to S408 as follows.

Step S402, the server encapsulates the Push message and sends the Push message. It is required to contain necessary information required by the FOTA operation in the Push message. The Push message comprises the original version (Pkglnfo/OriginalVersion) and upgrade version (Pkglnfo/UpdatedVersion) corresponding to the upgrade package, the download address of the upgrade package (DownloadAndUpdate/PkgURL), the priority of the FOTA operation (Ext/Severity), and Exec command on the DownloadAndUpdate node.

Step S404, the terminal device receives the Push message and delivers the Push message to the DM client for processing. The DM client first checks the security and integrity of the Push message.

Step S406, taking the Push message of Bootstrap type for example, the terminal checks the reliability of this Push message and the integrity of the Push message by using the security mechanism of Bootstrap. If the Push message is reliable, then return to Step S408, otherwise, perform Step S414.

Step S408: the DM client executes the commands included in the Push message.

Step S410, the DM client acquires the original version value (Pkglnfo/OriginalVersion) corresponding to the upgrade package, and compares the upgrade package with the firmware version of the current terminal device. If the comparison result is that they are identical to each other, then turn to Step S412, otherwise, turn to Step S414.

Step S412, if both of them are consistent, then start the FOTA operation flow. The DL server identified by the DownloadAndUpdate/PkgURL is connected according to the priority required by the Severity node.

Step S414, if they are inconsistent, then end.

It needs to be noted that the steps shown in the flowcharts of the drawings can be performed in a computer system such as a set of computer executable instructions, and although the logical order is shown in the flowcharts, the steps shown or described can be performed in an order different from the order here in some cases.

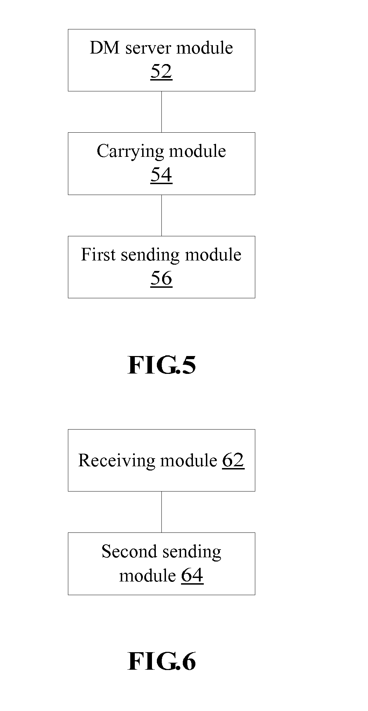

The embodiments of the present invention further provide a server, wherein the server can be used to implement the above method for initiating a terminal operation. FIG. 5 is a structural block diagram of a server according to one embodiment of the present invention, comprising a DM server module **52,** a carrying module **54,** and a sending module **56.** The structure thereof will be described in detail hereinafter.

The DM server module **52** is configured to encapsulate firmware update information for initiating a terminal to carry out a FOTA operation; the carrying module **54,** connected to the DM server module **52,** is configured to carry the firmware update information encapsulated by the DM server module **52** in a Push message; and the first sending module **56,** connected to the carrying module **54,** is configured to send the Push message in which the DM server module **54** carries the firmware update information to the terminal so as to initiate the terminal to carry out the FOTA operation by using the firmware update information carried in the Push message.

In the related art, the FOTA operation of the terminal is initiated by a DM session. However, the DM session will cause redundant data amount. In the embodiments of the present invention, the carrying module **54** in the server carries the necessary information required by the FOTA operation in the Push message. After the terminal has received the Push message sent by the first sending module **56** in the server, the DM client judges whether the FOTA operation is required according to the current version and the updated version, and thereby the dependence of the FOTA operation on the DM session is avoided and the redundant data amount caused by the DM session is reduced.

It needs to be noted that the server described in the apparatus embodiments corresponds to the above method embodiments, and the specific implementation of the apparatus embodiments has been described in detail in the method embodiments, which need not be described here redundantly.

The embodiments of the present invention provide a terminal, wherein the terminal can be used to implement the above method for initiating a terminal operation. FIG. 6 is a structural block diagram of a terminal according to one embodiment of the present invention, comprising a receiving module **62** and a second sending module **64.** The structure thereof will be described in detail hereinafter.

The receiving module **62** is configured to receive a Push message from a server, wherein the Push message carries firmware update information, and the firmware update information is used for initiating the terminal to carry out a FOTA operation; and the second sending module **64,** connected to the receiving module **62,** is configured to send the Push message received by the receiving module **62** to a DM client so that the DM client carries out the FOTA operation on the terminal by using the firmware update information carried in the Push message.

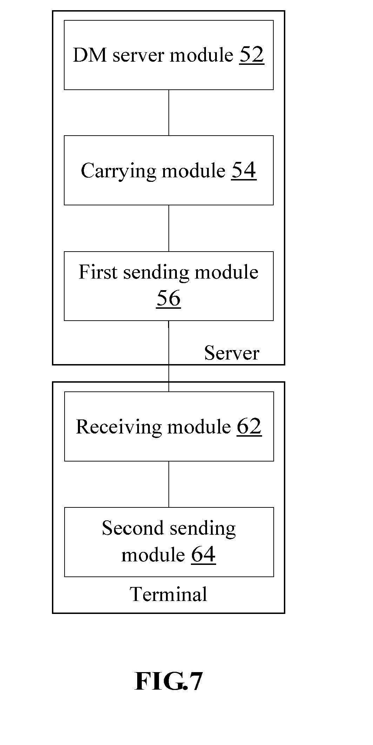

The embodiments of the present invention provide a system for initiating a terminal operation. FIG. 7 is a structural block diagram of a system for initiating a terminal operation according to one embodiment of the present invention, and as shown in FIG. 7, this system for initiating a terminal operation comprises the above server comprising the DM server module **52,** carrying module **54** and first sending module **56,** and the above terminal comprising the receiving module **62** and second sending module **64.** They will be described in detail hereinafter.

The DM server module **52** is configured to encapsulate firmware update information for initiating a terminal to carry out a FOTA operation; the carrying module **54,** connected to the DM server module **52,** is configured to carry the firmware update information encapsulated by the DM server module **52** in a Push message; and the first sending module **56,** connected to the carrying module **54,** is configured to send the Push message in which the DM server module **54** carries the firmware update information to the terminal so as to initiate the terminal to carry out the FOTA operation by using the firmware update information carried in the Push message.

The receiving module **62,** connected to the first sending module **56,** is configured to receive the Push message from the first sending module **56,** wherein the Push message carries the firmware update information, and the firmware update information is used for initiating the terminal to carry out the FOTA operation; and the second sending module **64,** connected to the receiving module **62,** is configured to send the Push message received by the receiving module **62** to the DM client so that the DM client carries out the FOTA operation on the terminal by using the firmware update information carried in the Push message.

In summary, a method, an apparatus and a system for initiating a terminal operation are provided according to the above embodiments of the present invention. The server is used for sending firmware update information to the terminal for initiating the terminal to carry out the FOTA operation, which solves the problem that the initiation of the FOTA operation depends upon the DM session and the DM session brings redundant data amount, and thereby the dependence of the FOTA operation on the DM session is avoided and the redundant data amount caused by the DM session is reduced.

Obviously, those skilled in the art should understand that the above modules or steps of the present invention can be implemented using a general-purpose calculating device, and they can be integrated on a single computing device or distributed over a network composed of multiple computing devices. Alternatively, they can be implemented using calculating device executable program codes. Thus, they can be stored in a storage device for being executed by the calculating device, or they can be made into various integrated circuit modules respectively, or some modules or steps therein are made into a single integrated circuit module for implementation. In this way, the present invention is not limited to any particular combination of hardware and software.

## Claims

1. A method for initiating a terminal operation, comprising:
a Device Management, DM, server encapsulating firmware update information for initiating a terminal to carry out a Firmware over the Air, FOTA, operation;
the DM server sending a Push message to a DM client of the terminal and carrying the firmware update information in the Push message; and
the DM client of the terminal carrying out the FOTA operation by using the firmware update information carried in the Push message;
**characterized in that** the step of the DM server encapsulating the firmware update information for initiating the terminal to carry out the FOTA operation comprises:
the DM
server encapsulating the firmware update information comprising a Firmware Update Management Object, FUMO, standard node and a FUMO extension node, wherein the FUMO standard node and the FUMO extension node are used for initiating the terminal to carry out the FOTA operation; wherein the FUMO extension node comprises:
a node value for indicating an original version of firmware update; and
a node value for indicating an upgrade version of firmware update.

2. The method according to Claim 1, wherein the FUMO standard node comprises:
a node value for indicating a download address of the FOTA operation; and
a running command on a node value for initiating the terminal to carry out the FOTA operation.

3. The method according to Claim 1, wherein the FUMO extension node value comprises:
a node value for indicating a priority of the FOTA operation.

4. The method according to Claim 1, wherein the the step of the terminal carrying out the FOTA operation by using the firmware update information carried in the Push message comprises:
the terminal receiving the Push message from the server;
the terminal sending the Push message to a Device Management (DM) client;
and
the DM client carrying out the FOTA operation on the terminal by using the firmware update information carried in the Push message.

5. The method according to Claim 4, wherein the step of the DM client carrying out the FOTA operation on the terminal by using the firmware update information carried in the Push message comprises:
the DM client judging whether an original version value of the firmware update information is the same as a firmware version value of the terminal;
if the judgment result is yes, then the DM client judging whether an upgrade version value in the firmware update information is a version value accepted by the terminal; and
if the judgment result is yes, then the DM client carrying out the FOTA operation on the terminal.

6. A server, comprising:
a Device Management, DM, server module (52), configured to encapsulate firmware update information for initiating a terminal to carry out a Firmware over the Air, FOTA, operation;
a carrying module (54), configured to carry the firmware update information in a Push message; and
a first sending module (56), configured to send the Push message to a DM client of the terminal so as to initiate the DM client of the terminal to carry out the FOTA operation by using the firmware update information carried in the Push message;
**characterized in that** the DM server module is further configured to encapsulate the firmware update information comprising a Firmware Update Management Object, FUMO, standard node and a FUMO extension node, wherein the FUMO standard node and the FUMO extension node are used for initiating the terminal to carry out the FOTA operation;
wherein the FUMO extension node comprises:
a node value for indicating an original version of firmware update; and
a node value for indicating an upgrade version of firmware update.

7. A terminal, comprising:
a receiving module (62), configured to receive a Push message from a Device Management, DM, server, wherein the Push message carries firmware update information, and the firmware update information is used for initiating a terminal to carry out a Firmware over the Air, FOTA, operation; and
a second sending module (64), configured to send the Push message to a DM client so that the DM client carries out the FOTA operation on the terminal by using the firmware update information carried in the Push message;
**characterized in that** the receiving module is further configured to receive the Push message, wherein the firmware update information comprises a Firmware Update Management Object, FUMO, standard node and a FUMO extension node, wherein the FUMO standard node and the FUMO extension node are used for initiating the terminal to carry out the FOTA operation;
wherein the FUMO extension node comprises:
a node value for indicating an original version of firmware update; and
a node value for indicating an upgrade version of firmware update.

8. A system for initiating a terminal operation, comprising a server as claimed in Claim 6 and a terminal as claimed in Claim 7.

## Patentansprüche

1. Verfahren zum Einleiten eines Endgerätevorgangs, aufweisend:
ein Gerätemanagement (DM) - Server kapselt Firmware-Aktualisierungsinformationen zum Veranlassen eines Endgeräts, einen Firmware-Over-the-Air (FOTA) - Vorgang auszuführen;
der DM-Server sendet eine Push-Nachricht an einen DM-Client des Endgerätes und überträgt die Firmware-Aktualisierungsinformationen in der Push-Nachricht; und
der DM-Client des Endgerätes führt den FOTA-Vorgang mittels der in der Push-Nachricht übertragenen Firmware-Aktualisierungsinformationen aus,
**dadurch gekennzeichnet, dass**
der Schritt des DM-Servers, die Firmware-Aktualisierungsinformationen zum Veranlassen des Endgeräts, den FOTA-Vorgang auszuführen, zu kapseln, aufweist:
der DM-Server kapselt die Firmware-Aktualisierungsinformationen, die einen Firmware-Aktualisierungsverwaltungsobjekt (FUMO) - Standardknoten und einen FUMO-Erweiterungsknoten aufweisen, wobei der FUMO-Standardknoten und der FUMO-Erweiterungsknoten zum Veranlassen des Endgeräts, den FOTA-Vorgang auszuführen, verwendet werden;
der FUMO-Erweiterungsknoten aufweist:
einen Knotenwert zum Angeben einer Ursprungsversion der Firmware-Aktualisierung; und
einen Knotenwert zum Angeben einer Upgrade-Version der Firmware-Aktualisierung.

2. Verfahren nach Anspruch 1, bei welchem
der FUMO-Standardknoten aufweist:
einen Knotenwert zum Angeben einer Download-Adresse des FOTA-Vorgangs; und
einen Betriebsbefehl auf einem Knotenwert zum Veranlassen des Endgeräts, den FOTA-Vorgang auszuführen.

3. Verfahren nach Anspruch 1, bei welchem
der FUMO-Erweiterungsknotenwert aufweist:
einen Knotenwert zum Angeben einer Priorität des FOTA-Vorgangs.

4. Verfahren nach Anspruch 1, bei welchem
der Schritt des Ausführens des FOTA-Vorgangs durch das Endgerät unter Verwendung der in der Push-Nachricht übertragenen Firmware-Aktualisierungsinformationen aufweist:
das Endgerät empfängt die Push-Nachricht von dem Server;
das Endgerät sendet die Push-Nachricht an einen Gerätemanagement (DM) - Client; und
der DM-Client führt den FOTA-Vorgang an dem Endgerät unter Verwendung der in der Push-Nachricht übertragenen Firmware-Aktualisierungsinformationen aus.

5. Verfahren nach Anspruch 4, bei welchem
der Schritt des Ausführens des FOTA-Vorgangs an dem Endgerät durch den DM-Client unter Verwendung der in der Push-Nachricht übertragenen Firmware-Aktualisierungsinformationen aufweist:
der DM-Client beurteilt, ob ein Ursprungsversionswert der Firmware-Aktualisierungsinformationen der gleiche ist wie ein Firmware-Versionswert des Endgeräts;
falls das Beurteilungsergebnis Ja ist, dann beurteilt der DM-Client, ob ein Upgrade-Versionswert in den Firmware-Aktualisierungsinformationen ein durch das Endgerät akzeptierter Versionswert ist; und
falls das Beurteilungsergebnis Ja ist, dann führt der DM-Client den FOTA-Vorgang an dem Endgerät aus.

6. Server, aufweisend:
ein Gerätemanagement (DM) - Servermodul (52), ausgestaltet zum Kapseln von Firmware-Aktualisierungsinformationen zum Veranlassen eines Endgeräts, einen Firmware-Over-the-Air (FOTA) - Vorgang auszuführen;
ein Übertragungsmodul (54), ausgestaltet zum Übertragen der Firmware-Aktualisierungsinformationen in einer Push-Nachricht; und
ein erstes Sendemodul (56), ausgestaltet zum Senden der Push-Nachricht an einen DM-Client des Endgeräts, um so den DM-Client des Endgeräts zu veranlassen, den FOTA-Vorgang unter Verwendung der in der Push-Nachricht übertragenen Firmware-Aktualisierungsinformationen auszuführen,
**dadurch gekennzeichnet, dass**
das DM-Servermodul weiter ausgestaltet ist, die Firmware-Aktualisierungsinformationen zu kapseln, die einen Firmware-Aktualisierungsverwaltungsobjekt (FUMO) - Standardknoten und einen FUMO-Erweiterungsknoten aufweisen, wobei der FUMO-Standardknoten und der FUMO-Erweiterungsknoten zum Veranlassen des Endgeräts, den FOTA-Vorgang auszuführen, verwendet werden,
der FUMO-Erweiterungsknoten aufweist:
einen Knotenwert zum Angeben einer Ursprungsversion der Firmware-Aktualisierung; und
einen Knotenwert zum Angeben einer Upgrade-Version der Firmware-Aktualisierung.

7. Endgerät, aufweisend:
ein Empfangsmodul (62), ausgestaltet zum Empfangen einer Push-Nachricht von einem Gerätemanagement (DM) - Server, wobei die Push-Nachricht Firmware-Aktualisierungsinformationen überträgt und die Firmware-Aktualisierungsinformationen verwendet werden zum Veranlassen eines Endgeräts, einen Firmware-Over-the-Air (FOTA) - Vorgang auszuführen; und
ein zweites Sendemodul (64), ausgestaltet zum Senden der Push-Nachricht an einen DM-Client, so dass der DM-Client den FOTA-Vorgang an dem Endgerät unter Verwendung der in der Push-Nachricht übertragenen Firmware-Aktualisierungsinformationen ausführt,
**dadurch gekennzeichnet, dass**
das Empfangsmodul weiter ausgestaltet ist, um die Push-Nachricht zu empfangen, wobei die Firmware-Aktualisierungsinformationen einen Firmware-Aktualisierungsverwaltungsobjekt (FUMO) - Standardknoten und einen FUMO-Erweiterungsknoten aufweisen, wobei der FUMO-Standardknoten und der FUMO-Erweiterungsknoten zum Veranlassen des Endgeräts, den FOTA-Vorgang auszuführen, verwendet werden;
der FUMO-Erweiterungsknoten aufweist:
einen Knotenwert zum Angeben einer Ursprungsversion der Firmware-Aktualisierung; und
einen Knotenwert zum Angeben einer Upgrade-Version der Firmware-Aktualisierung.

8. System zum Einleiten eines Endgerätevorgangs, aufweisend einen Server nach Anspruch 6 und ein Endgerät nach Anspruch 7.

## Revendications

1. Procédé d'initiation d'une opération de terminal, comprenant :
l'intégration par un serveur de gestion de dispositif, DM, d'informations de mise à jour de microprogramme, destinées à initier la mise en oeuvre d'une opération de téléchargement de mise à jour de microprogramme, FOTA, par un terminal ;
l'envoi par le serveur DM d'un message de notification à un client DM du terminal et le transfert des informations de mise à jour de microprogramme dans le message de notification ; et
la mise en oeuvre de l'opération FOTA par le client DM du terminal en utilisant les informations de mise à jour de microprogramme contenues dans le message de notification ;
**caractérisé en ce que** l'étape d'intégration des informations de mise à jour de microprogramme par le serveur DM afin d'initier la mise en oeuvre de l'opération FOTA par le terminal comprend :
l'intégration par le serveur DM des informations de mise à jour de microprogramme comprenant un noeud standard d'objet de gestion de mise à jour de microprogramme, FUMO, et un noeud d'extension FUMO, dans lequel le noeud standard FUMO et le noeud d'extension FUMO sont utilisés afin d'initier la mise en oeuvre de l'opération FOTA par le terminal ;
dans lequel le noeud d'extension FUMO comprend :
une valeur de noeud destinée à indiquer une version d'origine de mise à jour de microprogramme ; et
une valeur de noeud destinée à indiquer une version actualisée de mise à jour de microprogramme.

2. Procédé selon la revendication 1, dans lequel le noeud standard FUMO comprend :
une valeur de noeud destinée à indiquer une adresse de téléchargement de l'opération FOTA ; et
une instruction d'exécution sur une valeur de noeud afin d'initier la mise en oeuvre de l'opération FOTA par le terminal.

3. Procédé selon la revendication 1, dans lequel la valeur de noeud d'extension FUMO comprend :
une valeur de noeud destinée à indiquer une priorité de l'opération FOTA.

4. Procédé selon la revendication 1, dans lequel l'étape de mise en oeuvre de l'opération FOTA par le terminal en utilisant les informations de mise à jour de microprogramme contenues dans le message de notification comprend :
la réception du message de notification à partir du serveur par le terminal ;
l'envoi du message de notification à un client de gestion de dispositif (DM) par le terminal ; et
la mise en oeuvre de l'opération FOTA par le client DM sur le terminal en utilisant les informations de mise à jour de microprogramme contenues dans le message de notification.

5. Procédé selon la revendication 4, dans lequel l'étape de mise en oeuvre de l'opération FOTA par le client DM sur le terminal en utilisant les informations de mise à jour de microprogramme contenues dans le message de notification comprend :
la détermination par le client DM du fait qu'une valeur de version d'origine des informations de mise à jour de microprogramme est identique à une valeur de version de microprogramme du terminal ;
si le résultat de détermination est oui, alors le client DM détermine si une valeur de version d'une mise à jour dans les informations de mise à jour de microprogramme est une valeur de version acceptée par le terminal ; et
si le résultat de détermination est oui, alors le client DM met en oeuvre l'opération FOTA sur le terminal.

6. Serveur comprenant :
un module de serveur de gestion de dispositif (52), DM, configuré de manière à contenir des informations de mise à jour de microprogramme destinées à initier la mise en oeuvre d'une opération de téléchargement de mise à jour de microprogramme, FOTA, sur un terminal ;
un module d'intégration (54), configuré de manière à intégrer les informations de mise à jour de microprogramme dans un message de notification ; et
un premier module d'envoi (56), configuré de manière à envoyer le message de notification à un client DM du terminal afin d'initier la mise en oeuvre de l'opération FOTA par le client DM du terminal en utilisant les informations de mise à jour de microprogramme contenues dans le message de notification ;
**caractérisé en ce que** le module serveur DM est en outre configuré de manière à intégrer les informations de mise à jour de microprogramme, comprenant un noeud standard d'objet de gestion de mise à jour de microprogramme, FUMO, et un noeud d'extension FUMO, dans lequel le noeud standard FUMO et le noeud d'extension FUMO sont utilisés afin d'initier la mise en oeuvre de l'opération FOTA par le terminal ;
dans lequel le noeud d'extension FUMO comprend :
une valeur de noeud destinée à indiquer une version d'origine de mise à jour de microprogramme ; et
une valeur de noeud destinée à indiquer une version actualisée de mise à jour de microprogramme.

7. Terminal comprenant :
un module de réception (62), configuré de manière à recevoir un message de notification à partir d'un serveur de gestion de dispositif, DM, dans lequel le message de notification intègre des informations de mise à jour de microprogramme, et les informations de mise à jour de microprogramme sont utilisées afin d'initier la mise en oeuvre d'une opération de téléchargement de mise à jour de microprogramme, FOTA, par un terminal ; et
un second module d'envoi (64), configuré de manière à envoyer le message de notification à un client DM de telle sorte que le client DM mette en oeuvre l'opération FOTA sur le terminal en utilisant les informations de mise à jour de microprogramme intégrées dans le message de notification ;
**caractérisé en ce que** le module de réception est en outre configuré de manière à recevoir le message de notification, dans lequel les informations de mise à jour de microprogramme comprennent un noeud standard d'objet de gestion de mise à jour de microprogramme, FUMO, et un noeud d'extension FUMO, dans lequel le noeud standard FUMO et le noeud d'extension FUMO sont utilisés afin d'initier la mise en oeuvre de l'opération FOTA par le terminal ;
dans lequel le noeud d'extension FUMO comprend :
une valeur de noeud destinée à indiquer une version d'origine de mise à jour de microprogramme ; et
une valeur de noeud destinée à indiquer une version actualisée de mise à jour de microprogramme.

8. Dispositif d'initiation d'une opération de terminal, comprenant un serveur selon la revendication 6 et un terminal selon la revendication 7.
